# EUROPÄISCHE PATENTANMELDUNG

(11) **EP 4 102 202 A2**
(43) Veröffentlichungstag der Anmeldung: **14.12.2022**
(21) Anmeldenummer: 22177140.5
(22) Anmeldetag: 03.06.2022
(51) Int. Cl.: G01L 23/10, G01V 1/00

(54) **AUFNAHMEELEMENT**

(30) Priorität: 11.06.2021 EP 21179157
(71) Anmelder: Kistler Holding AG, 8408 Winterthur (CH)
(72) Erfinder: Weber, David, 8472 Seuzach (CH); Frommenwiler, Tobias, 8406 Winterthur (CH); Laffranchi, Marco, 8408 Winterthur (CH); Wyss, Andreas, 8050 Zürich (CH)

(57) **Zusammenfassung**

Die Erfindung betrifft ein Aufnahmeelement (1) zur Ermittlung eines transversalen Übergangsdrucks einer Stoßwelle (9), umfassend einen entlang einer Längsachse (X) ausgestalteten Körper (2); welcher Körper (2) einen Nasenabschnitt (3) aufweist; welcher Körper (2) einen Messabschnitt (4) aufweist; wobei der Nasenabschnitt (3) anschliessend an den Messabschnitt (4) angeordnet ist; wobei sich der Nasenabschnitt (3) ausgehend vom Messabschnitt (4) entlang der Längsachse (X) bis zu einer Nasenende (31) verjüngt; wobei der Messabschnitt (4) mindestens drei Druckaufnehmer (5a,5b,5c) aufweist; wobei jeder der mindestens drei Druckaufnehmer (5a,5b,5c) eine druckempfindliche Druckaufnehmerfläche (6) aufweist; wobei die Druckaufnehmerfläche (6) jedes der mindestens drei Druckaufnehmern (5a,5b,5c) parallel zur Längsachse (X) angeordnet ist; und wobei die mindestens drei Druckaufnehmer (5a,5b,5c) entlang der Längsachse (X) beabstandet (Dab,Dbc) voneinander angeordnet sind. Das Aufnahmeelement (1)ist geeignet für die Ermittlung von Geschwindigkeit und Beschleunigung einer Stosswelle (9).

## Beschreibung

### Technisches Gebiet

Die Erfindung betrifft ein Aufnahmeelement zur Ermittlung physikalischer Eigenschaften einer Stosswelle in einem Fluid sowie ein Verfahren zur Ermittlung physikalischer Eigenschaften einer Stosswelle in einem Fluid.

### Stand der Technik

Eine Stosswelle oder eine Druckwelle kann sich in einem Medium, beispielsweise einem Fluid, ausbreiten. Ein Fluid ist ein Gas oder eine Flüssigkeit. Im Folgenden wird der Begriff Stosswelle stellvertretend für Druckwellen oder Stosswellen genutzt.

Stosswellen treten in vielen Situationen auf. So ist eine plötzliche Expansion in einem Fluid mit einer sich vom Ort der Expansion ausbreitenden Stosswelle verbunden. Eine Expansion kann beispielsweise durch schnelles Ausweichen eines Fluids aus einer Öffnung gegeben sein; beispielsweise bei der Bewegung eines Kolbens in einem Zylinder. Eine Stosswelle kann durch eine schnelle Bewegung eines Festkörpers ausgelöst sein, beispielsweise eines schnellen Entleerens eines mit Fluid gefüllten Raumes oder Füllens eines vormals weitgehend leeren Raumes durch einen Auslass. Auch eine Explosion kann eine Expansion in einem Fluid sein. Ebenso ist eine Implosion in einem Fluid mit einer sich ausbreitenden Stosswelle verbunden.

Stosswellen können sich ungehindert im Raum ausbreiten. Stosswellen können sich auch gerichtet Ausbreiten, beispielsweise innerhalb einer Achse in einem Hohlzylinder.

Die Stosswelle weist eine Stosswellenfront auf, welche sich durch das Fluid ausbreitet. Die Stosswellenfront nach einer Explosion weist dabei einen Druckanstieg gegenüber dem unberührtem Fluid auf. Die Stosswellenfront nach einer Implosion weist einen Druckabfall gegenüber dem unberührtem Fluid auf. Im Folgenden wird nur der Fall der Stosswelle mit einer Stosswellenfront als Druckanstieg beschrieben. Der Fachmann kann die folgende Beschreibung der Erfindung jedoch entsprechend auf eine Stosswellenfront mit Druckabfall anpassen.

An einem festen Ort ist eine Stosswelle als transienter Druck ermittelbar. Transient wird im Folgenden immer als zeitlich transient verstanden. Ein transienter Druck ist daher ein Druck als Funktion der Zeit. Eine sich über den Ort ausbreitende Stosswelle ist als Druckanstieg auf einen Maximaldruck, gefolgt von einem Druckabfall ermittelbar.

Eine Stosswelle weist mehrere physikalischen Eigenschaften auf. So weist eine Stosswelle einen Maximaldruck auf. So weist eine Stosswelle einen zeitlichen Druckanstieg als Anstieg vom Druck des unberührten Fluids auf einen Maximaldruck auf. So weist eine Stosswelle eine Wellenfront auf. Die Wellenfront ist an einer Position zu einem Zeitpunkt definiert, wenn der Druckanstieg einen Wendepunkt aufweist. Eine Alternative Definition der Wellenfront ist an einer Position zu einem Zeitpunkt definiert, wenn der Druck die Hälfte der Höhe zwischen dem Druck des unberührten Fluids und dem Maximaldruck erreicht. Die Stosswelle weist eine Abklingzeit auf, die an einer Position zu einem Zeitpunkt definiert ist, wenn der Druck vom Maximaldruck auf einen bestimmten Anteil des Maximaldrucks abgefallen ist. Die Stosswelle weist eine Stosswellengeschwindigkeit auf, mit sich die Stosswellenfront durch das Fluid bewegt. Die Stosswelle weist eine Stosswellenbeschleunigung auf. Im allgemeinen nimmt die Geschwindigkeit der Stosswellenfront mit zunehmender zurückgelegter Distanz ab. Die Stosswellenbeschleunigung ist daher meist negativ. Es wird jedoch darauf hingewiesen, dass im Folgenden eine positive Stosswellenbeschleunigung explizit mit eingeschlossen ist.

Die US2799788A offenbart ein Aufnahmeelement zur Bestimmung des transienten Drucks einer Stosswelle. Das Aufnahmeelement weist einen entlang einer Längsachse ausgestalteten Körper mit einen Nasenabschnitt und einem Messabschnitt auf. Zur Messung des transienten Drucks einer Stosswelle ist der Aufnehmer mit der Längsachse senkrecht zur Stosswellenfront ausgerichtet. Der Nasenabschnitt ist anschliessend an den Messabschnitt angeordnet und verjüngt sich entlang der Längsachse bis zu einem Nasenende. So werden Verwirbelungen und/oder Verzerrungen der Stosswellenfront vermieden. Verwirbelungen oder Verzerrungen würden eine lokale Druckänderung bewirken, der transiente Druck der Stosswelle würde nicht korrekt bestimmt. Im Messabschnitt ist ein Druckaufnehmer angeordnet, welcher eine drucksensitive Druckaufnehmerfläche quer zur Längsachse aufweist. Der Querdruck, auch transversaler Übergangsdruck genannt, ist bis auf einen Proportionalitätsfaktor gleich dem transienten Druck der Stosswelle. Nachteilig ist hierbei, dass weder die Stosswellengeschwindigkeit noch die Stosswellenbeschleunigung bestimmt werden können.

Aufgabe der Erfindung ist daher einen Aufnehmer bereitzustellen, mit dem sowohl der transiente Druck einer Stosswelle als auch die Stosswellenbeschleunigung und die Stosswellengeschwindigkeit einfach und effizient ermittelbar sind.

### Darstellung der Erfindung

Die Aufgabe wird durch die Merkmale der unabhängigen Ansprüche gelöst.

Die Erfindung betrifft ein Aufnahmeelement 1 zur Ermittlung eines transversalen Übergangsdruck einer Stoßwelle in einem Fluid, umfassend einen entlang einer Längsachse ausgestalteten Körper; welcher Körper einen Nasenabschnitt aufweist; welcher Körper einen Messabschnitt aufweist; wobei der Nasenabschnitt anschliessend an den Messabschnitt angeordnet ist; wobei sich der Nasenabschnitt ausgehend vom Messabschnitt entlang der Längsachse bis zu einer Nasenende verjüngt; wobei der Messabschnitt mindestens drei Druckaufnehmer aufweist; wobei dass ein Druckaufnehmer eine druckempfindliche Druckaufnehmerfläche aufweist; wobei die Druckaufnehmerfläche jedes der mindestens drei Druckaufnehmern parallel zur Längsachse angeordnet ist; und wobei die mindestens drei Druckaufnehmer entlang der Längsachse beabstandet voneinander angeordnet sind.

Das Aufnahmeelement wird mit der Längsachse parallel zur erwarteten Ausbreitungsrichtung der Stosswelle angeordnet. Der Körper weist einen Nasenabschnitt auf, welcher der Stosswelle zugewandt angeordnet wird. Der Nasenabschnitt ist eingerichtet die Stoßwelle allmählich zu komprimieren um zu ermöglichen, dass Verzerrungen der Stosswelle und eine damit einhergehende lokale Störung des Drucks der Stosswelle aufgrund der allmählichen Kompression beim Umströmen des Aufnahmeelements durch das bewegte Fluid der Stosswelle minimiert werden. Dadurch ist das Aufnahmeelement angepasst, um transversalen Übergangsdruck einer Stoßwelle ohne übermäßige Störung zu messen.

Durch die Verwendung von mindestens drei entlang der Längsachse angeordneten Druckaufnehmern ist es einfach Möglich mit nur einem Aufnahmeelement mehrere physikalische Eigenschaften einer Stosswelle zu bestimmen, indem mindestens drei transiente Drücke unabhängig voneinander als Drucksignale ermittelt werden. Der Anstand der Druckaufnehmer entlang der Längsachse ist bekannt. Die mindestens drei transienten Drucksignale werden an den Positionen der Druckaufnehmerflächen der Druckaufnehmer entlang der Ausbreitungsrichtung der Stosswelle beabstandet voneinander ermittelt. Die zeitliche Position der Stosswellenfront wird aus einem Anstieg jedes Drucksignals ermittelt. Die zeitliche Differenz wird zwischen den mindestens drei Stosswellenfronten ermittelt. So kann aus der Laufzeit, i.e. die zeitliche Differenz zwischen der Ermittlung der Stosswellenfront durch jeden der drei Druckaufnehmer eine Stosswellengeschwindigkeit ermittelt werden. Ebenso kann eine Stosswellenbeschleunigung aus der zeitliche Differenz zwischen den mindestens drei Stosswellenfronten und der bekannten Distanz der Druckaufnehmerflächen entlang der Längsachse ermittelt werden.

### Kurze Beschreibung der Zeichnungen

Im Folgenden wird die Erfindung beispielhaft unter Beizug der Figuren näher erklärt. Es zeigen
- Fig. 1: eine schematische Teilansicht einer Ausführungsform eines Aufnahmeelements,
- Fig. 2: eine schematische Teilansicht einer weiteren Ausführungsform eines Aufnahmeelements,
- Fig. 3: eine weitere schematische Teilansicht der Ausführungsform eines Aufnahmeelements auf Fig. 1,
- Fig. 4: eine weitere schematische Teilansicht der Ausführungsform eines Aufnahmeelements auf Fig. 1,
- Fig. 5: eine schematische Darstellung ermittelter Drucksignale,
- Fig. 6: eine schematische Teilansicht einer weiteren Ausführungsform eines Aufnahmeelements,
- Fig. 7: eine schematische Teilansicht einer weiteren Ausführungsform eines Aufnahmeelements mit Aufnahmeeinheit.

### Wege zur Ausführung der Erfindung

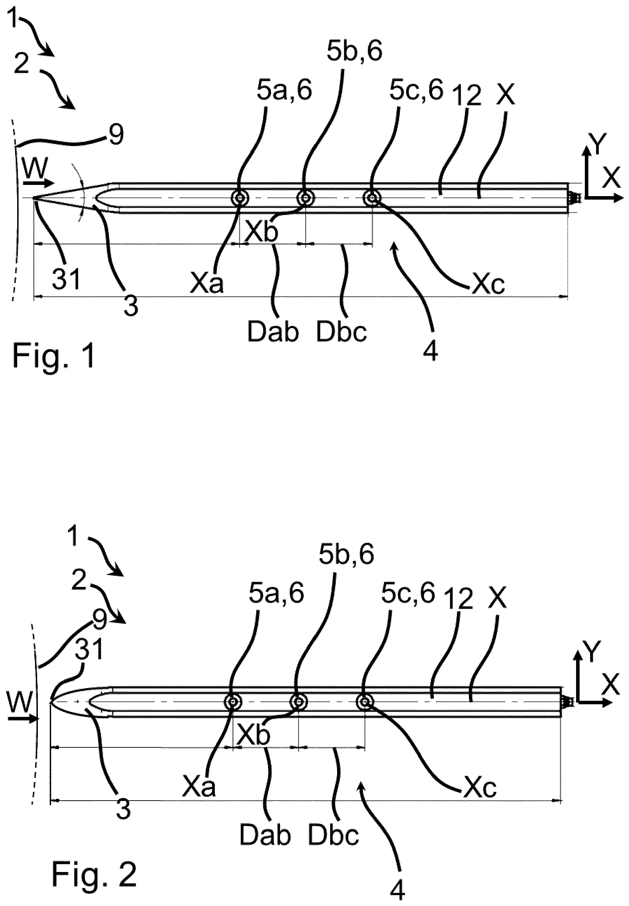

Fig. 1 zeigt eine Ausführungsform eines Aufnahmeelements 1 zur Ermittlung eines transversalen Übergangsdruck einer Stoßwelle 9. Das Aufnahmeelement umfassend einen entlang einer Längsachse X ausgestalteten Körper 2. Der Körper 2 weist einen Nasenabschnitt 3 auf. Der Körper 2 weist einen Messabschnitt 4 auf. Der Nasenabschnitt 3 ist anschliessend an den Messabschnitt 4 angeordnet. Der Nasenabschnitt 3 verjüngt sich ausgehend vom Messabschnitt 4 entlang der Längsachse X bis zu einem Nasenende 31. Diese Formgebung des Aufnahmeelements und speziell dem Nasenabschnitt 3 ist vorteilhaft, da auftreffende Stosswellen allmählich beim Umströmen des Aufnahmeelements komprimiert werden. Verwirbelungen und Verzerrungen der Stosswelle werden so vermieden.

Der Messabschnitt 4 weist erfindungsgemäss mindestens drei Druckaufnehmer 5a,5b,5c auf. Jeder der mindestens drei Druckaufnehmer 5a,5b,5c weist eine druckempfindliche Druckaufnehmerfläche 6 auf. Ein auf die Druckaufnehmerfläche 6 wirkender Druck wird durch den Druckaufnehmer 5a,5b,5c ermittelt. Die Druckaufnehmerfläche 6 jedes der mindestens drei Druckaufnehmer 5a,5b,5c ist parallel zur Längsachse X angeordnet. Der ermittelte Druck bei der Bewegung der Stosswelle 9 entlang der Längsachse X des Aufnahmeelements 1 ist daher der Querdruck, auch transienter Querdruck oder auch transversaler Übergangsdruck genannt. Die mindestens drei Druckaufnehmer 5a,5b,5c sind entlang der Längsachse X beabstandet voneinander angeordnet. Dies hat den Vorteil, dass die Ausbreitung der Stosswelle 9 an drei unterschiedlichen und fest definierten Positionen entlang der Ausbreitungsrichtung der Stosswelle vermessen werden kann. So ist beispielsweise eine Abnahme des Maximaldrucks der Stosswelle mit fortschreitender Laufzeit bzw. Laufdistanz der Stosswelle ermittelbar.

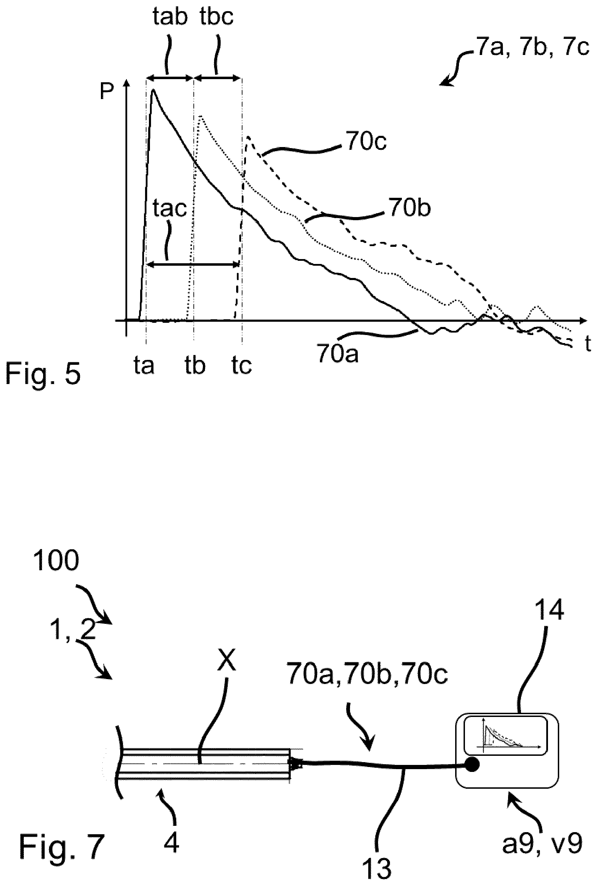

Bevorzugt ist jeder der mindestens drei Druckaufnehmer 5a,5b,5c eingerichtet einen auf die jeweilige Druckaufnehmerfläche 6 wirkenden transienten Druck 7a,7b,7c zu ermitteln und als Drucksignal 70a,70b,70c bereitzustellen. Eine schematische Darstellung ermittelter Drucksignale 70a,70b,70c ist in Figure 5 dargestellt. Die mindestens drei Drucksignale 70a,70b,70c werden zur weiteren Analyse der physikalischen Eigenschaften der Stosswelle 9 verwendet.

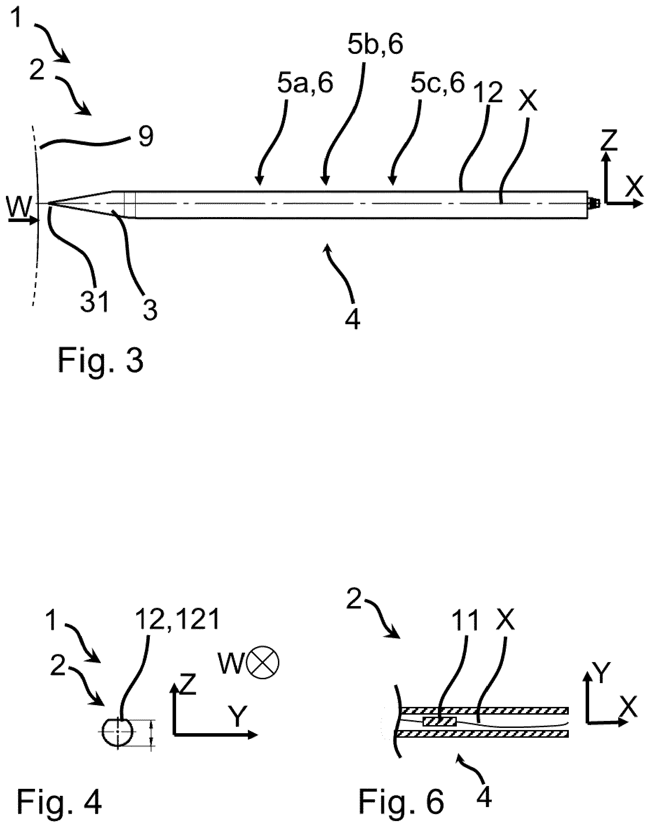

Besonders bevorzugt ist jeder der mindestens drei Druckaufnehmer 5a,5b,5c eingerichtet einen auf die jeweilige Druckaufnehmerfläche 6 wirkende transienten Druck 7a,7b,7c zu ermitteln und zusätzlich ist jeder der mindestens drei Druckaufnehmer 5a,5b,5c eingerichtet eine Beschleunigung 8a,8b,8c des jeweiligen Druckaufnehmers 5a,5b,5c unabhängig vom auf die Druckaufnehmerfläche 6 wirkenden Druck 7a,7b,7c zu ermitteln. Das Aufnahmeelement 1 weist in dem Fall eine Elektronikeinheit 11 auf, wie in Fig. 6 dargestellt. Die Elektronikeinheit 11 ist im Messabschnitt 4 angeordnet. Die Elektronikeinheit 11 erzeugt eine Differenz von ermittelten transienten Druck 7a,7b,7c und einem Anteil der ermittelten Beschleunigung als Drucksignal 70a,70b,70c und stellt das Drucksignal 70a,70b,70c bereit. Dies ist vorteilhaft, da ein Druckaufnehmer 5a,5b,5c, welcher einer Stosswelle 9 ausgesetzt ist, oftmals eine Beschleunigung erfährt. Eine Beschleunigung kann aber auf ein im Druckaufnehmer 5a,5b,5c wirken, da einzelne Bauelemente des Druckaufnehmers oder auch das Messelement selbst als seismische Masse wirken und bei einer Beschleunigung eine Kraft auf das Messelement ausüben. Eine Beschleunigung das Druckaufnehmers 5a,5b,5c kann so ein Signal erzeugen, welches als Drucksignal 70a,70b,70c missinterpretiert werden könnte. Daher ist der Druckaufnehmer 5a,5b,5c vorteilhafterweise eingerichtet, eine Beschleunigung 8a,8b,8c zu erfassen und ein dadurch hervorgerufenes Signal zu kompensieren. Dies geschieht in einer Elektronikeinheit 11. Im einfachsten Fall ist eine Elektronikeinheit 11 eine elektrisch leitende Verbindung zweier Leiter. Eine Beschleunigungskompensation eines Drucksensors und deren Funktionsweise ist beispielsweise in EP0902267A2 oder WO06131015A2 beschrieben.

Der Nasenabschnitt 3 ist in einer Ausführungsform weitgehend rotationssymmetrisch zur Längsachse X ausgeführt. Eine Länge des Nasenabschnitts entlang der Längsachse X ist mindestens drei Mal grösser als der grösste Durchmesser des Nasenabschnitts in einem Schnitt senkrecht zur Längsachse X. Dies hat den Vorteil, dass die Stosswelle 9 beim Auftreffen auf das Nasenende 31 des Nasenabschnitts 3 nur allmählich entlang der gesamten Länge des Nasenabschnitts 3 komprimiert wird. Verzerrungen und Verwirbelungen werden durch die allmähliche Änderung des Durchmessers des Nasenabschnitts vermieden.

Der Nasenabschnitt 3 ist in einer Ausführungsform gemäss Fig. 1 und Fig. 3 kegelförmig ausgeführt.

In einer weiteren Ausführungsform weist der Nasenabschnitt 3 in einem Schnitt parallel zur Längsachse X einen Querschnitt in Form einer Ogive auf, wie in Fig. 2 dargestellt. Diese Formgebung ist im Bereich von Flug- oder Schwimmkörper bekannt, die bei ihrer Bewegung durch ein Fluid einen möglichst geringen Widerstand aufweisen sollen. Unter dem Begriff Ogive wird in diesem Zusammenhang ein zugespitzter, stromlinienförmiger Rotationskörper verstanden.

Der Messabschnitt 4 ist weitgehend zylinderförmig entlang der Längsachse X ausgeführt. Damit schliesst sich der Messabschnitt 4 nahtlos und ohne Vorsprünge an den Nasenabschnitt 3 an. Dies ist vorteilhaft, da es im Bereich von Vorsprüngen zu Verwirbelungen oder Verzerrungen der Stosswelle 9 kommen kann.

In einer Ausführungsform weist der Körper 2 eine Abflachung 12 auf. Die Abflachung 12 weist in einem Querschnitt senkrecht zur Längsachse X die Form einer Sehne 121 auf, wie in Figur 4 dargestellt. Die Abflachung 12 ist eben und erstreckt sich zumindest teilweise entlang der Längsachse X und beabstandet von der Längsachse X, wie in Figur 2 dargestellt. Die jeweilige Druckaufnehmerflächen 6 der mindestens drei Druckaufnehmer 5a,5b,5c sind parallel zur Abflachung 12 angeordnet. Dies hat den Vorteil, dass der Körper 2 im Bereich des Messabschnitts 3 keine Vorsprünge aufweist. Dies ist vorteilhaft, da es im Bereich von Vorsprüngen zu Verwirbelungen oder Verzerrungen der Stosswelle 9 kommen kann. Die Druckaufnehmerflächen 6 der mindestens drei Druckaufnehmer 5a,5b,5c sind in einer Ausführungsform plan mit der Abflachung.

In einer weiteren Ausführungsform sind Druckaufnehmerflächen 6 der mindestens drei Druckaufnehmer 5a,5b,5c in Richtung der Längsachse X von der Abflachung 12 zurückversetzt angeordnet. Auch in dieser Ausführungsform weist der Körper 2 im Bereich des Messabschnitts 3 keine Vorsprünge auf. Dies ist vorteilhaft, da es im Bereich von Vorsprüngen zu Verwirbelungen oder Verzerrungen der Stosswelle 9 kommen kann. Die Versetzung der Druckaufnahmefläche zurück in Richtung der Längsachse X bewirkt jedoch einen Schutz der Druckaufnahmefläche, da die Druckaufnahmefläche weniger Scherkräften in Richtung der Längsachse X ausgesetzt ist.

In einer weiteren nicht dargestellten Ausführungsform ist die Druckaufnahmefläche mit einer flexiblen Schutzschicht beschichtet. Eine flexible Schutzschicht ist beispielsweise eine Vinylschicht. Die Vinylschicht kann lichtundurchlässig ausgeführt sein. Dies ist besonders vorteilhaft, wenn die Druckaufnahmefläche als dünnwandige Membran ausgebildet ist. Als dünnwandig wird eine Dicke von weniger als 0.2 mm verstanden. Die flexible Schutzschicht schützt das hinter der Membran angeordnete Druckmesselement vor Umwelteinflüssen, wie beispielsweise übermässiger Wärmeeinstrahlung. Ist beispielsweise die Stosswelle von einer elektromagnetischen Welle, beispielsweise im Infrarotbereich, begleitet, so kann die elektromagnetische Welle ein Signal im Druckmesselement erzeugen, welches irrtümlich als Drucksignal interpretiert werden könnte. Eine flexible Schutzschicht kann dieses Problem minimieren.

In einer bevorzugten Ausführungsform weist jeder der mindestens drei Druckaufnehmer 5a,5b,5c mindestens ein piezoelektrisches Druckmesselement 17 aufweist; welches Druckmesselement 17 mit der Druckaufnehmerfläche 6 in Wirkverbindung ist. In Wirkverbindung steht das Druckmesselement 17 mit der Druckaufnehmerfläche, wenn ein auf die Druckaufnehmerfläche wirkender Druck an das Druckmesselement 17 übertragen wird und das Druckmesselement dadurch eingerichtet ist, den Druck als physikalische Grösse zu erfassen. Piezoelektrische Druckmesselemente, sind aus piezoelektrischen Materialien gefertigt. Ein piezoelektrisches Material ist beispielsweise Quarz, Langasit (La₃Ga₅SiO₁₄), Galliumorthophosphat (GaPO₄), Lithiumniobat (LiNbO₃), Lithiumtantalat (Li-TaO₃), Berlinit (AlPO₄), Topaz, Mineralien der Tourmalingruppe und Bleititanat (PbTiO₃). Besonders bevorzugt wird in einer Ausführungsform des Druckmesselements 17 Quarz. Quarz ist robust und vergleichsweise günstig. Piezoelektrische Materialien erzeugen bei Wirken einer Kraft auf eine Oberfläche piezoelektrische Ladungen, die als Ladungssignal in einem Ladungsverstärker erfassbar sind. Piezoelektrische Materialien sind in der Messtechnik beliebt, da sie eine hohe Eigenfrequenz aufweisen und daher auch schnelle Kraftänderungen bis zur Eigenfrequenz des Kristalls erfassen können. Sie eignen sich daher vorteilhaft für schnelle Prozesse, wie beispielsweise die Ermittlung des transienten Drucks 7a,7b,7c von Stosswellen in Fluiden. Eine typische Eigenfrequenz eines Druckaufnehmers 5a,5b,5c mit piezoelektrischen Druckmesselement 17 beträgt bis zu 300 kHz.

Jeder der mindestens drei Druckaufnehmer 5a,5b,5c weist mindestens ein piezoelektrisches Beschleunigungsmesselement 15 auf. Das Beschleunigungsmesselement 15 ist eingerichtet eine Beschleunigung 8a,8b,8c des Druckaufnehmers 1 unabhängig vom dem auf die jeweilige Druckaufnehmerfläche 6 wirkenden transienten Druck 7a,7b,7c zu ermitteln. Wie bereits beschrieben kann so ein durch eine Beschleunigung 8a,8b,8c hervorgerufenes Signal des Druckmesselements kompensiert werden. Piezoelektrische Beschleunigungselemente zeichnen sich auch in dieser Anwendung durch die oben beschriebenen Vorteile aus.

Der Nasenabschnitt 3 ist vorteilhafterweise stromlinienförmig ausgeführt. Der Nasenabschnitt 3 ist eingerichtet eine auf den Nasenabschnitt 3 auftreffende Stoßwelle 9 allmählich bei ihrer Bewegung entlang der Längsachse X zu komprimieren. Dadurch werden vorteilhafterweise Verzerrungen oder Verwirbelungen der Stosswelle 9 vermieden.

Der Körper 2 ist aus einem Metall oder einer Metalllegierung ausgeführt. Metalle und Metalllegierungen weisen eine hohe Widerstandsfähigkeit auf. Das Aufnahmeelement 1 ist dadurch widerstandsfähiger gegen Beschädigung durch die Stosswelle 9.

Ein Aufnahmeelement 1 kann auch die Merkmale verschiedener beschriebener Ausführungsformen aufweisen. Beispielsweise ist die Formgebung des Nasenabschnitts 3 ohne weiteres mit der Wahl des Druckmesselements kombinierbar.

Ein Aufnahmeelement 1 wird zur Ermittlung physikalischer Eigenschaften einer Stosswelle 9 verwendet. Die Längsachse X des Aufnahmelements 1 wird weitgehend parallel zu einer Ausbreitungsrichtung W der Stosswelle 9 ausgerichtet. Das Nasenabschnittende 31 weist entgegen der Ausbreitungsrichtung W der Stosswelle 9. Das Aufnahmeelement 1 ermittelt mindestens drei transiente Drücke 7a,7b,7c und stellt diese als Drucksignal 70a,70b,70c bereit. Bereitstellen eines Signals ist so zu verstehen, dass das bereitgestellte Signal für eine weitere Verwendung verfügbar ist. Bereitstellen beinhaltet so auch das Speichern des Signals auf einem elektronischen Speicher und das Laden des Signals aus diesem Speicher. Bereitstellen beinhaltet auch die Möglichkeit der Darstellung des Signals auf einer Anzeige.

Eine Aufnahmeeinheit vergleicht 14 die drei bereitgestellten Drucksignale 70a,70b,70c. Die Aufnahmeeinheit 14 ermittelt mittels der zeitliche Abfolge (ta,tb,tc) der mindestens drei Drucksignale 70a,70b,70c mindestens eine Stosswellengeschwindigkeit v9 und stellt diese bereit. Eine Stosswellengeschwindigkeit v9 ist wird aus dem Quotienten von zurückgelegter Distanz und verstrichener Zeit ermittelt, mit der Distanz zwischen zwei Druckaufnehmerflächen 6 zweier Druckaufnehmer 5a,5b,5c und der verstrichenen Zeit als Zeitdifferenz der ermittelten Stosswellenfront 91 an den entsprechenden Druckaufnehmern 5a,5b,5c. Eine Aufnahmeeinheit 14 ist in Fig. 7 dargestellt.

Die Aufnahmeeinheit 14 ermittelt mittels der zeitliche Abfolge ta,tb,tc des Auftreffens der Stosswellenfront 91 an den mindestens drei Druckaufnehmern 5a.5b.5c eine Stosswellenbeschleunigung a9. Aus den drei Drucksignalen 70a,70b,70c wird die Stosswellenbeschleunigung a9 ermittelt und bereitstellt. Zunächst wird dafür die Geschwindigkeit v9 der Stosswelle 9 zwischen einem ersten Druckaufnehmer 5a und einem zweiten Druckaufnehmer 5b ermittelt wie oben beschrieben. Dann wird die die Geschwindigkeit v9 der Stosswelle zwischen einem zweiten Druckaufnehmer 5b und einem dritten Druckaufnehmer 5c ermittelt. Aus der Änderung der beiden ermittelten Geschwindigkeiten v9 ist die Beschleunigung a9 der Stosswelle 9 ermittelbar. Die Beschleunigung a9 kann positiv oder negativ sein. Eine negative Beschleunigung a9 ist als Verzögerung bekannt.

Eine Aufnehmeranordnung 100 umfasst ein Aufnahmeelement 1, ein Kabel 13 und eine Aufnahmeeinheit 14. Das Kabel 13 verbindet das Aufnahmeelement 1 mit der Aufnahmeeinheit 14 elektrisch leitend. Bereitgestellte Drucksignale 70a,70b,70c werden durch das Kabel 13 vom Aufnahmeelement 1 an die Aufnahmeeinheit 14 übertragen. Das Aufnahmeelement 1 ist eingerichtet die mindestens drei Drucksignale 70a,70b,70c zu erfassen. Die Aufnahmeeinheit 14 ist zudem eingerichtet die mindestens drei Drucksignale 70a,70b,70c zu vergleichen.

Zur Bestimmung physikalischer Eigenschaften einer Stosswelle 9 ist ein Verfahren im Folgenden beschrieben. Das Verfahren beinhaltet das Ermitteln mindestens dreier transienter Drücke 7a,7b,7c als Drucksignale 70a,70b,70c. Die mindestens drei transienten Drucksignale 70a,70b,70c werden an Positionen Xa,Xb,Xc entlang der Ausbreitungsrichtung W der Stosswelle 9 beabstandet voneinander ermittelt. Die zeitliche Position ta,tb,tc einer Stosswellenfront 91 wird aus einem Anstieg jedes Drucksignals 70a,70b,70c ermittelt. Die zeitliche Differenz tab,tac,tbc zwischen den mindestens drei Stosswellenfronten wird ermittelt. Die zeitliche Differenz tab,tac,tbc ist die Zeitdifferenz die zwischen dem Auftreffen der Stosswellenfront 91 auf eine der drei Positionen Xa,Xb,Xc bis zum Auftreffend der Stosswellenfront 91 auf eine weitere der drei Positionen Xb,Xc,Xa verstreicht. Eine Geschwindigkeit v9 der Stosswelle 9, auch Stosswellengeschwindigkeit v9 genannt, wird aus der zeitliche Differenz tab,tac,tbc zwischen den mindestens drei ermittelten Stosswellenfronten 91 ermittelt. Eine Stosswellenbeschleunigung a9 wird aus der zeitliche Differenz tab,tac,tbc zwischen den mindestens drei Stosswellenfronten 91 ermittelt.

Durch die Stosswellenbeschleunigung a9 und der Stosswellengeschwindigkeit v9 ist zusammen mit der bereits bekannten Ermittlung des transienten Drucks eine umfassende Charakterisierung der Stosswelle möglich.

Bevorzugt werden in dem Verfahren zur Bestimmung physikalischer Eigenschaften einer Stosswelle 9 die mindestens drei Drucksignale 70a,70b,70c mit einem Aufnahmeelement 1 ermittelt und bereitgestellt. Die Längsachse des Aufnahmeelements 1 ist dabei parallel zur einer Ausbreitungsrichtung W der Stosswelle 9 angeordnet, wie bereits beschrieben.

Die Stosswellenfront 9 kann auf verschiedene Arten bestimmt werden. In einer Aufführungsform des Verfahrens ist die Stosswellenfront 91 am Zeitpunkt ermittelt, an der ein ansteigender transienter Druck 7a,7b,7c des Drucksignals 70a,70b,70c die Hälfte des maximalen Drucksignals 70a,70b,70c beträgt. In einer weiteren Ausführungsform des Verfahrens ist die Stosswellenfront 9 am Zeitpunkt ermittelt, an dem ein ansteigender transienter Druck 7a,7b,7c einen Wendepunkt aufweist. Mittels beider Ausführungsformen kann sowohl die Geschwindigkeit v9 als auch die Beschleunigung a9 der Stosswelle 9 bestimmt werden.

In einer Ausführungsform des Aufnahmeelements 1 mit piezoelektrischen Druckmesselementen 17 ist die Elektronikeinheit 11 wie in Fig. 6 dargestellt zusätzlich als Ladungsverstärker ausgeführt. Dies hat den Vorteil, dass piezoelektrische Ladungen nicht über ein Kabel 13 zu einer externen Aufnahmeeinheit 14 geleitet werden müssen. Bei einer Leitung von elektrischen Ladungen bestehen hohe Isolationsanforderungen von mindestens 10^10 Ohm an das Kabel 13. Weist die Elektronikeinheit 11 einen Ladungsverstärker auf, so kann ein langes Kabel ohne weiteres gewählt werden. Dies vereinfacht eine Aufnehmeranordnung 100, da die Aufnahmeeinheit 14 in sicherer Entfernung von der Stosswelle 9 platziert werden kann.

Ein Aufnahmeelement 1 ist eingerichtet Drücke von bis zu 1000 psi oder ungefähr 69 bar zu ermitteln. Das Aufnahmeelement 1 ist eingerichtet Drücken von bis zu 5000 psi oder ungefähr 350 bar ohne Schaden ausgesetzt zu sein.

Die in dieser Schrift offenbarten Ausführungsformen des Verfahrens oder des Aufnahmeelements 1 sind selbstverständlich miteinander kombinierbar. Es sind explizit in dieser Schrift auch Ausführungsformen einbezogen, welche eine Kombination der Merkmale hierin beschriebener Ausführungsformen aufweisen.

### Bezugszeichenliste

- 1: Aufnahmeelement
- 100: Aufnehmeranordnung
- 11: Elektronikeinheit
- 12: Abflachung
- 121: Sehne
- 13: Kabel
- 14: Aufnahmeeinheit
- 15: Piezoelektrisches Beschleunigungsmesselement
- 17: Piezoelektrisches Druckmesselement
- 2: Körper
- 3: Nasenabschnitt
- 31: Nasenende
- 4: Messabschnitt
- 5: Druckaufnehmer
- 6: Druckaufnehmerfläche
- 70a,70b,70c: Drucksignal
- 7a,7b,7c: Druck
- 80a,80b,80c: Beschleunigungssignal
- 8a,8b,8c: Beschleunigung
- 9: Stosswelle
- a9: Beschleunigung, Stosswellenbeschleunigung
- Dab,Dbc: Distanz
- P: Druck
- t: Zeit
- ta,tb,tc: Zeit
- tab,tac,tbc: Zeitdifferenz
- v9: Geschwindigkeit
- W: Ausbreitungsrichtung
- X: Längsachse
- Xa,Xb,Xc: Position

## Patentansprüche

1. Aufnahmeelement (1) zur Ermittlung eines transversalen Übergangsdruck einer Stoßwelle (9) in einem Fluid, umfassend einen entlang einer Längsachse (X) ausgestalteten Körper (2); welcher Körper (2) einen Nasenabschnitt (3) aufweist; welcher Körper (2) einen Messabschnitt (4) aufweist; wobei der Nasenabschnitt (3) anschliessend an den Messabschnitt (4) angeordnet ist; wobei sich der Nasenabschnitt (3) ausgehend vom Messabschnitt (4) entlang der Längsachse (X) bis zu einer Nasenende (31) verjüngt; **dadurch gekennzeichnet, dass** der Messabschnitt (4) mindestens drei Druckaufnehmer (5a,5b,5c) aufweist; dass jeder der mindestens drei Druckaufnehmer (5a,5b,5c) eine druckempfindliche Druckaufnehmerfläche (6) aufweist; dass die Druckaufnehmerfläche (6) jedes der mindestens drei Druckaufnehmern (5a,5b,5c) parallel zur Längsachse (X) angeordnet ist; und dass die mindestens drei Druckaufnehmer (5a,5b,5c) entlang der Längsachse (X) beabstandet (Dab,Dbc) voneinander angeordnet sind.

2. Aufnahmeelement (1) nach dem vorherigen Anspruch, **dadurch gekennzeichnet, dass** jeder der mindestens drei Druckaufnehmer (5a,5b,5c) eingerichtet ist einen auf die jeweilige Druckaufnehmerfläche (6) wirkenden transienten Druck (7a,7b,7c) zu ermitteln und als Drucksignal (70a,70b,70c) bereitzustellen.

3. Aufnahmeelement (1) nach Anspruch 1, **dadurch gekennzeichnet, dass** jeder der mindestens drei Druckaufnehmer (5a,5b,5c) eingerichtet ist einen auf die jeweilige Druckaufnehmerfläche (6) wirkende transienten Druck (7a,7b,7c) zu ermitteln; wobei jeder der mindestens drei Druckaufnehmer (5a,5b,5c) eingerichtet ist eine Beschleunigung (8a,8b,8c) des jeweiligen Druckaufnehmers (5a,5b,5c) unabhängig vom auf die Druckaufnehmerfläche (6) wirkenden Druck (7a,7b,7c) zu ermitteln; wobei das Aufnahmeelement eine Elektronikeinheit (11) aufweist; wobei die Elektronikeinheit (11) im Messabschnitt (4) angeordnet ist; wobei die Elektronikeinheit (11) eine Differenz von ermittelten transienten Druck (7a,7b,7c) und einem Anteil der ermittelten Beschleunigung (8a,8b,8c) als Drucksignal (70a,70b,70c) erzeugt und bereitgestellt.

4. Aufnahmeelement (1) nach Anspruch 2 oder 3 , **dadurch gekennzeichnet, dass** der Nasenabschnitt (3) weitgehend rotationssymmetrisch zur Längsachse (X) ausgeführt ist und eine Länge des Nasenabschnitts entlang der Längsachse mindestens drei Mal grösser als der grösste Durchmesser des Nasenabschnitts in einem Schnitt senkrecht zur Längsachse ist; und dass der Nasenabschnitt (3) kegelförmig ausgeführt ist oder dass der Nasenabschnitt (3) in einem Schnitt parallel zur Längsachse (X) einen Querschnitt in Form einer Ogive aufweist.

5. Aufnahmeelement (1) nach einem der vorherigen Ansprüche, **dadurch gekennzeichnet, dass** der Messabschnitt (4) weitgehend zylinderförmig entlang der Längsachse ausgeführt (X) ist.

6. Aufnahmeelement (1) nach Anspruch 5, **dadurch gekennzeichnet, dass** der Körper (2) eine Abflachung (12) aufweist; dass die Abflachung (12) in einem Querschnitt senkrecht zur Längsachse (X) die Form einer Sehne (121) aufweist; dass sich die Abflachung (12) eben zumindest teilweise entlang der Längsachse (X) und beabstandet von der Längsachse (X) erstreckt; dass die jeweilige Druckaufnehmerflächen (6) der mindestens drei Druckaufnehmer (5a,5b,5c) parallel zur Abflachung (12) angeordnet sind; und dass die Druckaufnehmerflächen (6) der mindestens drei Druckaufnehmer (5a,5b,5c) plan mit der Abflachung sind oder dass die Druckaufnehmerflächen (6) der mindestens drei Druckaufnehmer (5a,5b,5c) in Richtung der Längsachse (X) von der Abflachung (12) zurückversetzt angeordnet sind.

7. Aufnahmeelement (1) nach einem der Ansprüche 2 bis 6, **dadurch gekennzeichnet, dass** jeder der mindestens drei Druckaufnehmer (5a,5b,5c) mindestens ein piezoelektrisches Druckmesselement (17) aufweist; welches Druckmesselement (17) mit der Druckaufnehmerfläche (6) in Wirkverbindung ist.

8. Aufnahmeelement (1) nach Anspruch 7, **dadurch gekennzeichnet, dass** jeder der mindestens drei Druckaufnehmer (5a,5b,5c) mindestens ein piezoelektrisches Beschleunigungsmesselement (15) aufweist; welches piezoelektrische Beschleunigungsmesselement (15) eingerichtet ist eine Beschleunigung (8a,8b,8c) des Druckaufnehmers (1) unabhängig vom dem auf die jeweilige Druckaufnehmerfläche (6) wirkenden transienten Druck (7a,7b,7c) zu ermitteln.

9. Aufnahmeelement (1) nach einem der Ansprüche 1 bis 8, **dadurch gekennzeichnet, dass**, wobei der Nasenabschnitt (3) stromlinienförmig ausgeführt ist; wobei der Nasenabschnitt (3) eingerichtet ist eine auf den Nasenabschnitt (3) auftreffende Stoßwelle (9) allmählich bei ihrer Bewegung entlang der Längsachse (X) zu komprimieren.

10. Aufnahmeelement (1) nach einem der Ansprüche 1 bis 9, **dadurch gekennzeichnet, dass** der Körper (2) aus einem Metall oder einer Metalllegierung ausgeführt ist.

11. Verwendung eines Aufnahmeelements (1) nach einem der Ansprüche 1 bis 10 zur Ermittlung physikalischer Eigenschaften einer Stosswelle (9); wobei die Längsachse (X) des Aufnahmelements (1) weitgehend parallel zu einer Ausbreitungsrichtung (W) der Stosswelle (9) ausgerichtet ist; wobei das Aufnahmeelement (1) mindestens drei transiente Drücke (7a,7b,7c) ermittelt und als Drucksignal (70a,70b,70c) bereitstellt; wobei eine Aufnahmeeinheit (14) die drei bereitgestellten Drucksignale (70a,70b,70c) vergleicht; wobei die Aufnahmeeinheit (14) mittels der zeitliche Abfolge (ta,tb,tc) der mindestens drei Drucksignale (70a,70b,70c) mindestens eine Stosswellengeschwindigkeit (v9) ermittelt und bereitstellt; wobei die Aufnahmeeinheit (14) mittels der zeitliche Abfolge (ta,tb,tc) der mindestens drei Drucksignale (70a,70b,70c) mindestens eine Stosswellenbeschleunigung (a9) ermittelt und bereitstellt.

12. Aufnehmeranordnung (100) umfassend ein Aufnahmeelement (1) nach einem der Ansprüche 1 bis 10, weiter umfassend ein Kabel (13) eine Aufnahmeeinheit (14); wobei das Kabel (13) das Aufnahmeelement (1) mit der Aufnahmeeinheit (14) elektrisch leitend verbindet; wobei das Aufnahmeelement (1) eingerichtet ist die mindestens drei Drucksignale (70a,70b,70c) zu erfassen; und wobei die Aufnahmeeinheit (14) eingerichtet ist die mindestens drei Drucksignale (70a,70b,70c) zu vergleichen.

13. Verfahren zur Bestimmung physikalischer Eigenschaften einer Stosswelle (9); **dadurch gekennzeichnet, dass** mindestens drei transiente Drücke (7a,7b,7c) als Drucksignale (70a,70b,70c) ermittelt werden; dass die mindestens drei transienten Drucksignale (70a,70b,70c) an Positionen (Xa,Xb,Xc) entlang der Ausbreitungsrichtung (W) der Stosswelle (9) beabstandet voneinander ermittelt werden; dass die zeitliche Position (ta,tb,tc) einer Stosswellenfront (91) aus einem Anstieg jedes Drucksignals (70a,70b,70c) ermittelt wird; dass die zeitliche Differenz (tab,tac,tbc) zwischen den mindestens drei Stosswellenfronten ermittelt wird; dass eine Stosswellengeschwindigkeit (v9) aus der zeitliche Differenz (tab,tac,tbc) zwischen den mindestens drei ermittelten Stosswellenfronten (91) ermittelt wird; dass eine Stosswellenbeschleunigung (a9) aus der zeitliche Differenz (tab,tac,tbc) zwischen den mindestens drei Stosswellenfronten (91) ermittelt wird.

14. Verfahren zur Bestimmung physikalischer Eigenschaften einer Stosswelle (9) nach Anspruch 13, **dadurch gekennzeichnet, dass** die mindestens drei Drucksignale (70a,70b,70c) mit einem Aufnahmeelement (1) nach einem der Ansprüche 1 bis 10 ermittelt und bereitgestellt werden; wobei die Längsachse des Aufnahmeelements (1) parallel zur einer Ausbreitungsrichtung (W) der Stosswelle (9) angeordnet ist.

15. Verfahren zur Bestimmung physikalischer Eigenschaften einer Stosswelle (9) nach einem der Ansprüche 13 oder 14, **dadurch gekennzeichnet, dass** die Stosswellenfront (9) am Zeitpunkt ermittelt wird, an der ein ansteigender transienter Druck (7a,7b,7c) des Drucksignals (70a,70b,70c) die Hälfte des maximalen Drucksignals (70a,70b,70c) beträgt; oder **dadurch gekennzeichnet, dass** die Stosswellenfront (9) am Zeitpunkt ermittelt wird, an dem ein ansteigender transienter Druck (7a,7b,7c) einen Wendepunkt aufweist.
